# EUROPEAN PATENT APPLICATION

(11) **EP 2 127 519 A1**
(43) Date of publication of application: **02.12.2009**
(21) Application number: 09159683.3
(22) Date of filing: 07.05.2009
(51) Int. Cl.: A01N 25/18, A01N 53/00, A01M 1/20, A01P 7/04

(54) **A biocidal candle**

(30) Priority: 22.05.2008 IT RE20080045
(71) Applicant: RE.LE.VI. S.p.a., 46040 Rodigo (Mantova) (IT)
(72) Inventor: Pagani, Fabio, 46040 Rodigo (Mantova) (IT)
(74) Representative: Corradini, Corrado

(57) **Abstract**

A biocidal candle, which in the wax formulation therefor comprises at least an insecticidal substance which is constituted by a pyrethroid substance, preferably transfluthrin. In comparison with known electric, spray, trigger-operated or gel anti-mosquito systems, the candle of the invention provides the advantage of lighting the ambient environment, further constituting a decorative element and adding the capability of diffusing perfumed substances into the ambient environment. Compared with the known citronella-type of candle, the candle of the invention provides the advantage of implementing an effective insecticidal action, which is particularly useful for eliminating insects attracted by the light of the candle.

## Description

The invention concerns a biocidal candle which, by means of a combustion process, spreads an insecticide in the ambient environment, the insecticide being effective against various common mosquito species.

The field of the invention is that of anti-mosquito systems, which are traditionally of various types including electric, spray, trigger-operated, gel, combustion and the like. Alongside this prior art, candles using a citronella fragrance should be mentioned, which however perform only a moderate repellent action, and exhibit no insecticidal action.

The main aim of the present invention is to provide a new candle which adds to the traditional functions performed by candles, such as lighting the ambient environment, contributing to aesthetically improving it and diffusing fragrant substances within it, an insecticidal effect, in particular against all species of mosquito.

The biocidal candle of claim 1 achieves this and other aims.

Other preferred embodiments of the invention are delineated in the remaining claims.

Compared with other known electric, spray, trigger-operated or gel anti-mosquito systems, the system of the invention offers the advantage of illuminating the ambient environment, thereby also constituting a decorative element and adding the capability of diffusing perfumed substances around the ambient environment.

Compared with known citronella-type candles, the candle of the invention provides the advantage that it implements an effective insecticidal action, which is particularly useful for eliminating insects attracted by the light of the candle.

The active ingredient used in the candle of the invention is constituted by a pyrethroid substance, in particular transfluthrin.

Pyrethroids have never been used in the presence of a live flame, because it was commonly believed that this kind of substance burned and was therefore eliminated with the fumes of combustion.

Tests performed by the inventor of this invention have shown that pyrethroids, and in particular transfluthrin, when incorporated in the waxy matrix of a candle, spread through the ambient environment via the combined effect of the temperature and the solubilisation of the surface wax, which surface wax prevents direct, immediate contact of the active principle with the flame.

Indeed, as long as the candle is left unlit and at ambient temperature, the pyrethroid remains incorporated in the wax which, in this case, behaves as a binder for the biocidal substance.

Thanks to these characteristics, the invention provides the important advantage of making it possible to give rise to, or to interrupt, diffusion of the insecticide in the air by lighting or extinguishing the candle. When the candle is lit, the flame melts the wax and spreads the insecticide in the air; when the flame is extinguished, the wax cools and solidifies, thus retaining the insecticide.

A further important advantage of the invention is that the candle is easy to transport and can be used in any place and environment, since it requires no connection to a source of electrical energy.

In addition to its insecticidal action, the candle of the invention can be used against dust mites in the environment, since its active principle is also an effective anti-mite agent. This is important because there are markets where this anti-mite function is greatly appreciated, dust mites being among the most significant causes of allergy present in the environment.

In addition to transfluthrin, other substances which are effective for the invention are permethrin, cyfluthrin, allethrin, deltamethrin and the like, which are present in the wax in amounts ranging from 0.05 to 5% by weight, preferably from 0.05 to 1% by weight, alone or in combination.

In addition to this active principle, the candle of the invention can contain also fragrant substances such as citronella and geranium oil, alone or combined together.

Candles can be packaged in containers of any shape and of any type (glass, metals, etc.), in imaginative combinations of colours and shapes and on the basis of market demand. Candles can further be of the surface burning type or complete burning (scented oil) type.

In a first example, the biocidal candle of the invention exhibits the following formulation by weight:

| | |
|---|---|
| transfluthrin | 0.05 - 5% |
| perfume | 1% |
| colouring | 0.5% |
| wax | the remainder to reach 100% |

In a further embodiment, the composition of the candle of the invention is as follows:

| | |
|---|---|
| transfluthrin | 0.2% |
| perfume | 1% |
| colouring | 0.1% |
| wax | the remainder to reach 100% |

The following test demonstrates the effectiveness of the candle of the invention, using the formulation of the second embodiment provided above (0.2% transfluthrin).

| |
|---|
| **LABORATORY EVALUATION OF THE EFFECTIVENESS OF AN INSECT-REPELLENT AND INSECTIDAL ANTI-MOSQUITO PRODUCT** |

***

### 1. AIM

To establish the effectiveness of a candle for use in the environment as an anti-mosquito repellent and insecticide.

### 2. MATERIALS AND METHOD

Two adjacent rooms of 30m² were used, which communicated by means of an opening representing a window. Each room was in accordance with the BSI4172 aerosol test method.

ROOM 1 represents the external environment and ROOM 2 represents the house to be protected against insects.

Insects are released into ROOM 1 which is in darkness, and the candle is lighted in ROOM 2, which is thus illuminated and exhibits a bite target (a caged, hairless mouse wearing eye-protectors).

The opening between the rooms is kept closed for an hour after lighting the candle. Insects are then released in ROOM 1 and the window between the two rooms is opened.

The usual behaviour of flying insects is to fly toward the illuminated part, therefore recording the distribution of the insects between the two rooms should measure the effectiveness of the product as a repellent. A trial run was performed without using the product, in order to check that the insects do indeed fly mainly into the lighted part.
- opening between the two rooms: 90 cm wide x 1 m high
- ROOM 1: darkness + insects,
- ROOM 2: illuminated + product,
- 24 °C ± 2°C; 65 % RH (relative humidity) ± 5%RH, light 1500 lux
- insects: around 50 adult essentially female *Aedes aegypti* of a species which is sensitive, according to the WHO (source :ORSTOM/Bondy), aged 2
- 4 days at time of test,
- 3 repetitions; distribution of mosquitoes recorded every 5 minutes per hour, then after 6 and 8 hours (from release of the mosquitoes)
- between each test: the rooms were washed and an extractor fan was set in function (1200 m³/h); a " treatment-free control test" was performed between two repetitions to check that the rooms were not contaminated.

Analysis was effected by comparing the "treatment-free control test" and "treated control tests". The data obtained are reported below.

Between each evaluation stage, the product was conserved in controlled conditions: 24°C ± 2°C; 65 % RH ± 5% RH, photoperiod 8h/16/h darkness/light 700 lux, no active ventilation.

In addition to evaluating repellence, the experimenter recorded each insect mortality over a period of 8 hours from the start.

### 3. PRODUCT AND DOSAGE

The experimental sample was provided by RELEVI SpA:

### Sample 1771B - Candles with 0.2% transfluthrin

Dose: 1 sample for each test.

### 4. RESULTS

The data are reported in the tables below.

The percentages of insects which flew into the room to be protected, the room being without the product, confirmed the data.

The product showed a power of repellence of 93% at the outset and required 1 hour 30 minutes of exposure to kill all the mosquitoes.

The data were the same after 30 hours of diffusion: repellent action was 91 % with 1 hour 30 minutes of exposure being required to kill all the mosquitoes.

### Conclusion:

Under the conditions of this experiment, with the insect species and the samples of product used

Sample 177/B - Candles with 0.2% transfluthrin the candles exhibited a good level of effectiveness as an anti-mosquito repellent (>90%).

Effectiveness lasted for at least 30 hours.

There was also a good level of insecticidal effectiveness, with all mosquitoes being killed in less than 1 hour 30 minutes of exposure.

### DATA RECORDED

### SAMPLE 177/B - CANDLE WITH 0.2% TRANSFLUTHRIN

### TEST AFTER OPENING

| time | % of mosquitoes in room to be protected TEST WITHOUT PRODUCT | % of mosquitoes in room to be protected TEST WITH PRODUCT | % reduction = effectiveness |
|---|---|---|---|
| 1min | 3 | 0 | 100.0 |
| 2min | 7 | 1 | 85.7 |
| 3min | 11 | 2 | 81.8 |
| 4min | 16 | 2 | 87.5 |
| 5min | 21 | 3 | 85.7 |
| 6min | 23 | 4 | 82.6 |
| 7min | 28 | 4 | 85.7 |
| 8min | 39 | 5 | 87.2 |
| 9min | 46 | 6 | 87.0 |
| 10min | 51 | 6 | 88.2 |
| 11min | 56 | 5 | 91.1 |
| 12min | 61 | 5 | 91.8 |
| 13min | 68 | 7 | 89.7 |
| 14min | 72 | 6 | 91.7 |
| 15min | 79 | 5 | 93.7 |
| 20min | 81 | 6 | 92.6 |
| 25min | 83 | 7 | 91.6 |
| 30min | 85 | 7 | 91.8 |
| 35min | 87 | 5 | 94.3 |
| 40min | 91 | 5 | 94.5 |
| 45min | 91 | 5 | 94.5 |
| 50min | 94 | 6 | 93.6 |
| 55min | 95 | 6 | 93.7 |
| 1h | 95 | 7 | 92.6 |
| 1h30min | 93 | 6 | 93.5 |
| 2h | 92 | 5 | 94.6 |
| 2h30min | 93 | 6 | 93.5 |
| 3h | 92 | 6 | 93.5 |
| 24h | 92 | 6 | 93.5 |

### Sample 177/B - Candle with 0.2% transfluthrin

### TEST: +30 HOURS AFTER OPENING

| time | % of mosquitoes in room to be protected TEST WITHOUT PRODUCT | % of mosquitoes in room to be protected TEST WITH PRODUCT | % reduction = effectiveness |
|---|---|---|---|
| 1min | 3 | 0 | 100.0 |
| 2min | 7 | 2 | 71.4 |
| 3min | 11 | 2 | 81.8 |
| 4min | 16 | 3 | 81.3 |
| 5min | 21 | 3 | 85.7 |
| 6min | 23 | 4 | 82.6 |
| 7min | 28 | 5 | 82.1 |
| 8min | 39 | 5 | 87.2 |
| 9min | 46 | 6 | 87.0 |
| 10min | 51 | 5 | 90.2 |
| 11min | 56 | 6 | 89.3 |
| 12min | 61 | 6 | 90.2 |
| 13min | 68 | 6 | 91.2 |
| 14min | 72 | 7 | 90.3 |
| 15min | 79 | 6 | 92.4 |
| 20min | 81 | 7 | 91.4 |
| 25min | 83 | 6 | 92.8 |
| 30min | 85 | 6 | 92.9 |
| 35min | 87 | 6 | 93.1 |
| 40min | 91 | 6 | 93.4 |
| 45min | 91 | 6 | 93.4 |
| 50min | 94 | 5 | 94.7 |
| 55min | 95 | 7 | 92.6 |
| 1h | 95 | 6 | 93.7 |
| | | | |
| 1h30mi | 93 | 8 | 91.4 |
| 2h | 92 | 6 | 93.5 |
| 2h30mi | 93 | 5 | 94.6 |
| 3h | 92 | 7 | 92.4 |
| 24h | 92 | 8 | 91.3 |

### Sample 177/B - Candle with 0.2% transfluthrin

### TEST AFTER OPENING/INSECTICIDAL EFFECT

| | rep 1 | | | rep 2 | | | rep 3 | | | |
|---|---|---|---|---|---|---|---|---|---|---|
| | D | A | %KD | D | A | %K | D | A | %K | mean |
| 1h | 34 | 16 | 68.0 | 33 | 17 | 66.0 | 29 | 22 | 56.9 | 63.6 |
| 1h30mi | 50 | 0 | 100. | 50 | 0 | 100. | 51 | 0 | 100. | 100.0 |
| 2h | 50 | 0 | 100. | 50 | 0 | 100. | 51 | 0 | 100. | 100.0 |
| 4h | 50 | 0 | 100. | 50 | 0 | 100. | 51 | 0 | 100. | 100.0 |
| 24h | 50 | 0 | 100. | 50 | 0 | 100. | 51 | 0 | 100. | 100.0 |

| | | | | | | | | | | |
|---|---|---|---|---|---|---|---|---|---|---|
| D = dead/ killed A = live %KD = % killed rep = repetitions | | | | | | | | | | |

### TEST: +30 HOURS/INSECTICIDAL EFFECT

| | rep 1 | | | rep 2 | | | rep 3 | | | |
|---|---|---|---|---|---|---|---|---|---|---|
| | D | A | %KD | D | A | %K | D | A | %K | mean |
| 1h | 31 | 19 | 62.0 | 30 | 20 | 60.0 | 35 | 15 | 70.0 | 64.0 |
| 1h30mi | 50 | 0 | 100. | 50 | 0 | 100. | 50 | 0 | 100. | 100.0 |
| 2h | 50 | 0 | 100. | 50 | 0 | 100. | 50 | 0 | 100. | 100.0 |
| 4h | 50 | 0 | 100. | 50 | 0 | 100. | 50 | 0 | 100. | 100.0 |
| 24h | 50 | 0 | 100. | 50 | 0 | 100. | 50 | 0 | 100. | 100.0 |

| | | | | | | | | | | |
|---|---|---|---|---|---|---|---|---|---|---|
| D = dead/killed A = live %KD = % killed rep = repetitions *** The tests performed on the specimens of candle of the invention enable the product to be marketed as an insecticide in line with the 98/08/CE Biocidal Products Directive/Regulations | | | | | | | | | | |

## Claims

1. A biocidal candle **characterised in that** it comprises at least an insecticidal substance included in a wax formulation therefor.

2. The candle of claim 1, **characterised in that** the at least an insecticidal substance is effective against various common species of mosquito.

3. The candle of claim 1 or 2, **characterised in that** the at least an insecticidal substance is constituted by a pyrethroid substance.

4. The candle of claim 3, **characterised in that** the at least an insecticidal substance is selected from among transfluthrin, permethrin, cyfluthrin, allethrin and deltamethrin, alone or in combination.

5. The candle of claim 3 or 4, **characterised in that** the at least an insecticidal substance in the wax amounts to between 0.05 to 5% by weight, preferably between 0.05 to 1% by weight.

6. The candle of one or more of the preceding claims, **characterised in that** it further contains perfumed substances.

7. The candle of claim 6, **characterised in that** it exhibits a formula by weight as follows:
| | |
|---|---|
| transfluthrin | 0.05 - 5% |
| perfume | 1% |
| colouring | 0.5% |
| wax | the remainder to reach 100%. |

8. The candle of claim 6, **characterised in that** it exhibits a formula by weight as follows:
| | |
|---|---|
| transfluthrin | 0.2% |
| perfume | 1% |
| colouring | 0.1% |
| wax | the remainder to reach 100%. |
